# DEMANDE DE BREVET EUROPEEN

(11) **EP 0 863 417 A1**
(43) Date de publication de la demande: **09.09.1998**
(21) Numéro de dépôt: 98400500.9
(22) Date de dépôt: 03.03.1998
(51) Int. Cl.: G02B 6/30, G02B 6/42, G02B 6/16

(54) **Dispositif éclateur multiplexeur intégré pour fibres multicoeurs**

(30) Priorité: 05.03.1997 FR 9702607
(71) Demandeur: FRANCE TELECOM, 75015 Paris (FR)
(72) Inventeur: Boscher, Daniel, 22560 Trebeurden (FR)
(74) Mandataire: Texier, Christian

(57) **Abrégé**

La présente invention concerne un dispositif de connexion pour fibre multicoeur (10) caractérisé par le fait qu'il comprend deux substrats (100) adaptés pour être superposés et comprenant chacun une optique planaire (200) à guides multiples (222, 224, 226, 230) de sorte que les guides des deux substrats (100) soient disposés dans des plans parallèles qui coïncident avec les coeurs (11, 12, 13, 14) de la fibre (10).

## Description

La présente invention concerne le domaine des fibres optiques multicoeurs.

Plus précisément encore la présente invention concerne un dispositif éclateur multiplexeur duplexeur intégré pour fibres multicoeurs.

Dans le cadre de futur déploiement de réseaux FTTH (Fiber To The Home), l'aspect économique de l'ensemble composant actif et infrastructure optique est essentiel.

L'étude et la démonstration de faisabilité de la fibre multicoeurs ont montré un réel intérêt à cette innovation.

Les aspects économiques de réalisation des composants passifs et actifs adaptés à cette nouvelle fibre sont maintenant cruciaux pour l'avenir des réseaux FTTH dédiés ou faiblement dédiés.

Le concept de fibres multicoeurs envisagé sans succès en 1978 pour les fibres multimodes, est réapparu en 1991 avec l'application des fibres monomodes et l'utilisation de technologies de préformes offrant une très bonne qualité géométrique de celles-ci.

De nombreux documents ont été publiés sur les fibres multicoeurs. On peut citer par exemple les documents suivants.

Le document FR-A-2701571 concerne des guides optiques multicoeurs de grande précision et de petite dimension et un procédé de fabrication de ces guides.

Le document FR-A-2688318 concerne des conducteurs optiques multiguides.

Le document "Bunched multicore monomode fiber : A new key for the future FTTH network" EFOC N°94 Heidelberg Le Noane and A1, présente des résultats de réalisations de fibres optiques multicoeurs, notamment quant à la technologie, la théorie de propagation et des résultats expérimentaux.

Certains documents se sont préoccupés en particulier des solutions de raccordement, et surtout d'éclatement en extrémité de fibres multicoeurs pour aboutir avec une fibre monocoeur classique, d'un côté chez l'abonné, et de l'autre sur les composants optoélectroniques du centre.

Le document FR-A-2717912 concerne des éléments de raccordement à une fibre multicoeur et un procédé de réalisation et propose après attaque chimique cylindrique de fibres et assemblage dans un moule élastomère, un composant monobloc pigtailé.

Le document FR-A-2717913 concerne un composant de raccordement à une fibre multicoeur et un procédé de réalisation, et propose après attaque chimique conique des fibres et assemblage dans une ferrule culindrique, un composant connectorisé.

Le document "Distribution link components for point to point ultra low cost FTTH network using the bunched multicore monomode fiber design" IOOC 95 Hong Kong, Boscher et al, publie des résultats sur la connexion de fibres multicoeurs.

La présente invention a maintenant pour but de perfectionner les dispositifs de connexion de fibres multicoeurs connus.

Ce but est atteint dans le cadre de la présente invention grâce à un dispositif de connexion pour fibre multicoeur comprenant deux substrats adaptés pour être superposés et comprenant chacun une optique planaire à guides multiples de sorte que les guides des deux substrats soient disposés dans des plans parallèles qui coïncident avec les coeurs de la fibre.

La présente invention utilise de préférence des substrats en silicium.

La présente invention permet d'intégrer sur un même substrat toutes les fonctions pour réaliser une liaison optique double full duplex sur fibre multicoeurs, avec un coût global intéressant.

La présente invention permet en particulier le couplage sur un substrat, par exemple de silicium, d'une fibre multicoeurs sur des multiplexeurs, des coupleurs, et des composants optoélectroniques, sans connectique intermédiaire, pour le composant système utilisé au central, ou le couplage de la fibre, préférentiellement à 4 coeurs, sur x (par exemple 16) fibres individuelles, pour l'application du composant proposé au point de branchement.

D'autres caractéristiques, buts et avantages de la présente invention apparaitront à la lecture de la description détaillée qui va suivre et en regard des dessins annexés donnés à titre d'exemple non limitatif et sur lesquels :
- la figure 1 représente une vue en coupe transversale d'une fibre multicoeurs,
- la figure 2 représente une vue en perspective d'un substrat conforme à la présente invention, pour central,
- la figure 3 représente une vue en perspective d'un autre substrat conforme à la présente invention, pour point de branchement,
- la figure 4 représente une vue en bout d'un dispositif conforme à la présente invention, selon la vue IV de la figure 5
- la figure 5 représente une de dessus d'un substrat conforme à la présente invention, et

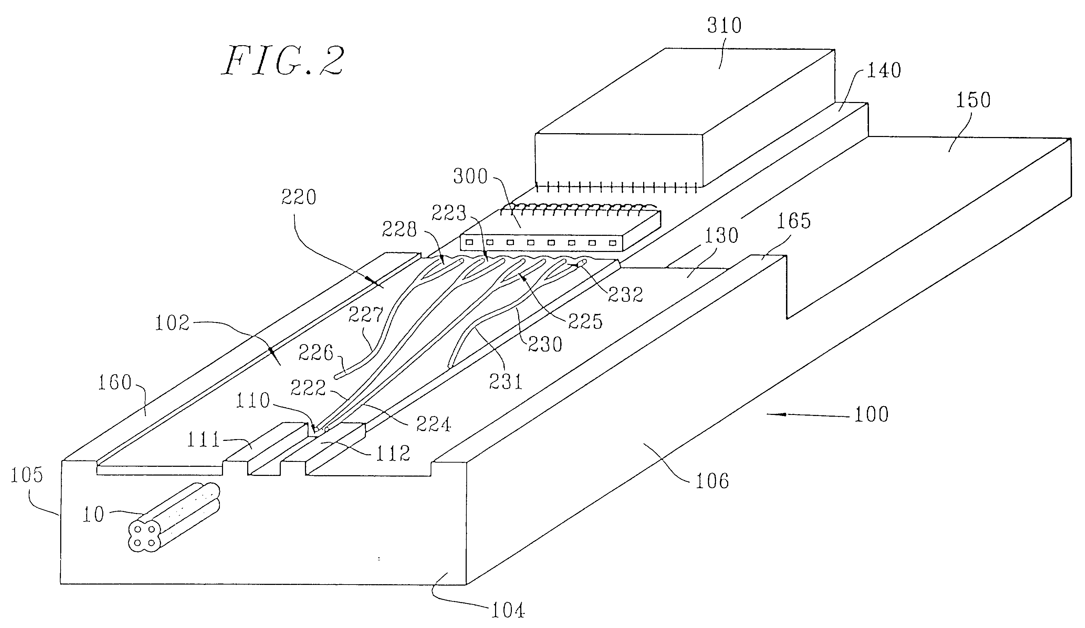

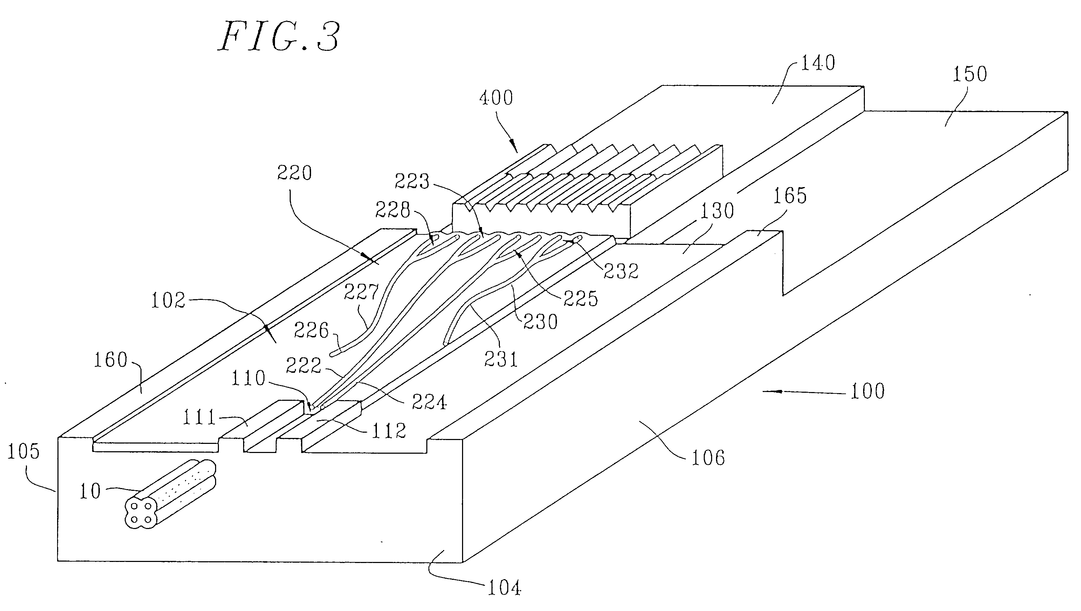

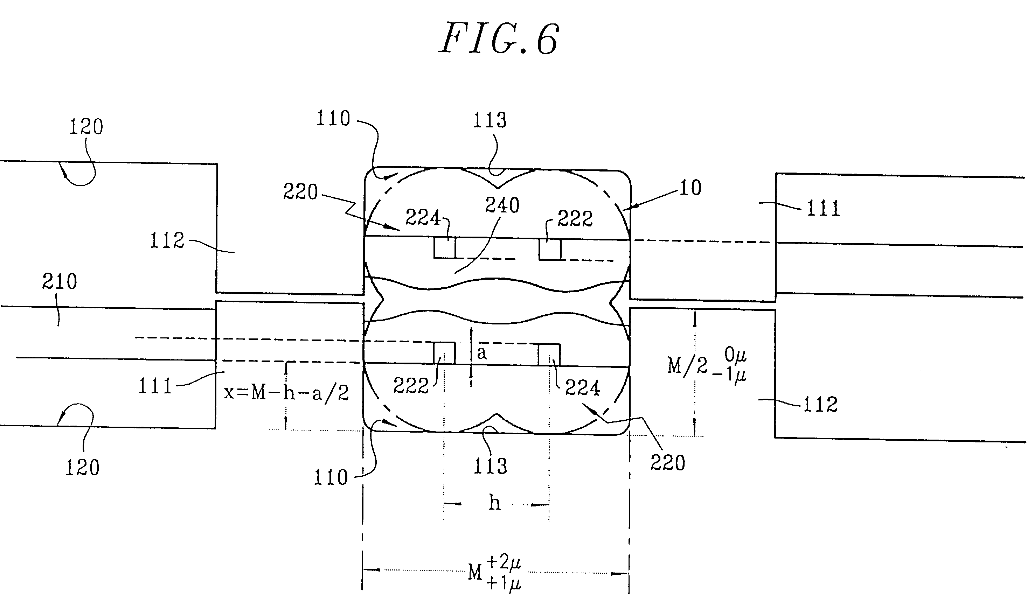

- la figure 6 représente une vue en bout de deux substrats superposés, conformes à la présente invention.

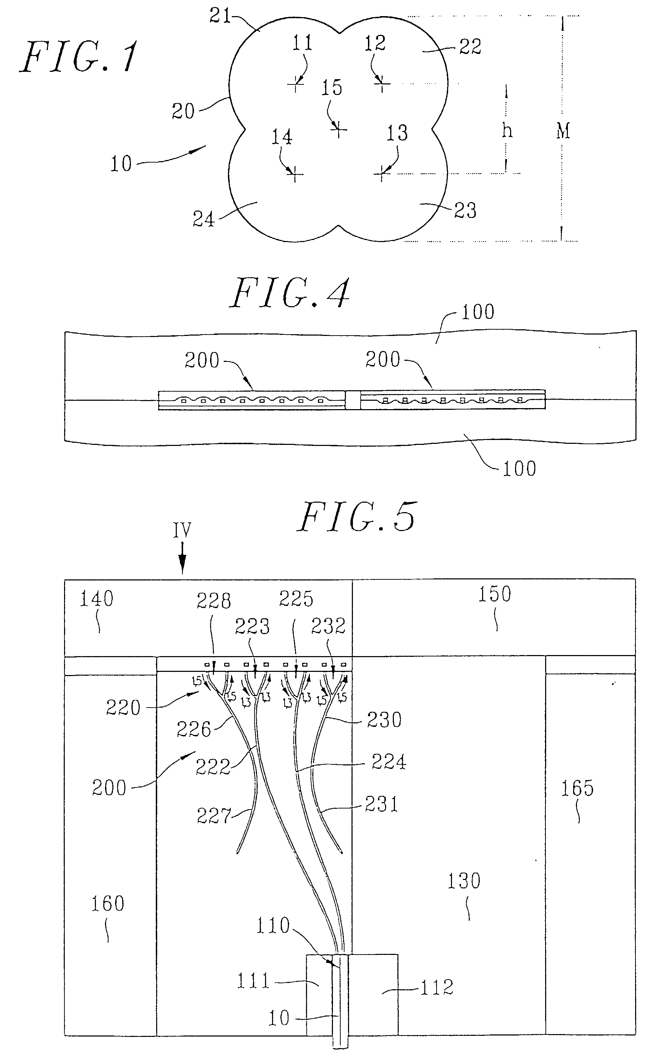

La figure 1 annexée illustre la géométrie d'une fibre 10 classique à 4 coeurs, en section droite. Une telle fibre 10 possède 4 coeurs 11, 12, 13 et 14 dont les axes coïncident respectivement avec les sommets d'un carré centré sur l'axe longitudinal 15 de la fibre 10. L'enveloppe ou gaine extérieure 20 de la fibre 10 est quadrilobée, chaque lobe 21, 22, 23 et 24 étant centré sur un axe de coeur. Une telle fibre 10 possède une dimension médiane M entre deux plans tangents respectivement à la surface extérieure de deux paires desdits lobes 21, 22 et 23, 24; elle possède par ailleurs un espacement intercoeurs h. Typiquement, mais non limitativement, sur les fibres connues de nos jours, M = 125 µm et h = 50 µm.

Le substrat 100 illustré sur la figure 2 annexée, réalisé avantageusement en silicium, a sa surface supérieure 102 gravée.

Cette gravure définit une rainure 110 de section droite rectangulaire constante encadrée de deux murets rectilignes 111, 112. La largeur de la rainure 110, qui correspond à la distance entre les murets 111 et 112 est égale à M + 1 µm ou 2 µm, M désignant la dimension médiane de la fibre 10 à connecter. La profondeur de la rainure 110 est égale à M/2 +0µm ou -1µm. Le fond plan 113 de la rainure 110 est parallèle au plan moyen de la surface supérieure du substrat 100. Ainsi la rainure 110 est adaptée pour recevoir la moitié, en section, d'une fibre multicoeur 10 et les rainures 110 alignées de deux substrats 100 superposés sont adaptées pour recevoir totalement cette fibre 10.

La rainure 110 est de préférence formée au centre de la largeur du substrat 100. La rainure 110 est par ailleurs de préférence parallèle à la direction longitudinale de ce substrat 100. Ainsi les murets 111 et 112 sont parallèles aux flancs longitudinaux 105 et 106 du substrat 100. La rainure 110 débouche sur une face latérale 104 du substrat 100. Par ailleurs la rainure 110 et les murets 111 et 112 qui la délimitent ne s'étendent que sur une partie limitée de la longueur du substrat 100.

Au moins sur une partie de la zone qui entoure la rainure 110 et les murets 111 et 112, la surface supérieure du substrat présente un plan de gravure 120 adapté pour recevoir une optique planaire 200 en silice.

La profondeur de gravure du plan 120 peut coïncider avec celle de la rainure 110.

De préférence l'optique planaire 200 est composée : d'une couche de silice primaire 210 déposée sur le plan 120, d'un réseau de guides 220 formés de silice dopée déposés sur la silice primaire 210, et d'une couche de silice de recouvrement 240. En pratique les guides 220 sont de préférence de section carrée.

Le niveau supérieur de la silice primaire 210 sur laquelle sont déposés les guides 220 doit être à (M - h - a) / 2 du fond 113 de la rainure 110, de sorte que les extrémités des guides 220 qui débouchent en regard de la rainure 110 soient centrées sur des coeurs respectifs de la fibre 10.

La surface du substrat 100 non revêtue de l'optique planaire 200, adjacente à la rainure 110, est de préférence également gravée en retrait du sommet des murets 111 et 112 pour former un plan de dégagement 130. La profondeur de ce plan 130 peut être identique à celle du 120.

Le bord transversal des plans 120 et 130 opposé à la face latérale d'entrée 104 est de préférence orthogonal à la direction longitudinale du substrat 100. Au delà des plans 120, 130, c'est à dire au delà de ce bord transversal, le substrat 100 possède au moins un autre plan de gravure 140, 150 de préférence plus profond que les plans de gravure 120 et 130 précités.

Plus précisément encore selon le mode de réalisation préférentiel illustré sur les figures annexées, il est prévu ainsi au delà du bord transversal des plans de gravure 120 et 130, deux plans de gravure additionnels. Un premier plan de gravure 140 est destiné à recevoir par exemple soit une barrette de composants optiques 300 émetteurs/récepteurs à 1,3 µm et 1,5 µm et les circuits intégrés associés (voir figure 2), soit un support 400 comportant des Vés de réception de fibres monocoeurs (voir figure 3). Un second plan de gravure 150 de préférence plus profond que le plan 140, forme un plan de dégagement adapté pour recevoir les composants 300 ou 400 d'un second substrat complémentaire, et de préférence identique, retourné en regard comme illustré par eemple sur la figure 4.

Enfin on notera que le substrat 100 possède de préférence sur les bords longitudinaux des plans de gravure 120 et 130, des épaulements longitudinaux 160 et 165 dont les sommets coplanaires coïncident de préférence avec les sommets des murets 111 et 112. Ainsi lors de la superposition de deux substrats 100 retournés en regard, comme illustré sur la figure 4, ceux-ci reposent l'un sur l'autre au niveau de ces murets 111, 112 et épaulemenrs 160, 165.

Le réseau de guides 220 en silice dopée peut faire l'objet de nombreux modes de réalisation.

Selon le mode de réalisation préférentiel illustré sur les figures annexées, le réseau de guides 220 comprend deux guides principaux 222 et 224 qui cheminent sur la silice primaire 210 entre une première extrémité placée en regard de la rainure 110 et le bord transversal précité du plan de gravure 120. Plus précisément au voisinage de ce bord transveral, chaque guide principal 222 et 224 possède une bifurcation 223, 225 qui autorise une liaison bidirectionnelle vers et à partir d'un composant 300 ou 400 à 1,3 µm.

Le réseau de guides 220 comporte en outre deux guides auxiliaires 226 et 230 de plus faible longueur, qui possèdent chacun une portion incurvée 227 et 231 proche respectivement des guides principaux 222 et 224 pour permettre un couplage avec ceux-ci d'onde évanescente sélectif en longueur d'onde à 1,5 µm. Chacun des guides auxiliaires 226 et 230 se terminent au niveau du bord transversal du plan de gravure 120 sous forme d'une bifurcation 228 et 232 qui autorise une liaison bidirectionnelle vers et à partir d'un composant 300 ou 400.

Les autres extrémités des guides auxiliaires 226 et 230 sont de préférence traitées mécaniquement pour éviter de trop grandes réflexions à ce niveau.

En outre on peut placer un filtre de coupure au dessus de 1,4 µm sur les guides de réception 222 et 224 à 1,3 µm et un filtre de coupure en dessous de 1,4 µm sur les guides de réception 1,4 µm.

Le réseau de guides 220 en silice dopée permet ainsi d'adapter l'éclateur à l'écartement de la position des coeurs 11, 12, 13 et 14 de la fibre 4 coeurs, et d'assurer le multiplexage/démultiplexage 1, 3 µm, 1,5 µm et le coupleur émission/réception.

Ainsi le réseau de guides 220 permet de réaliser la fonction de multiplexage 1, 3 µm - 1,5 µm par couplage sélectif en longueur d'onde, puis les fonctions de séparation classiques 1 vers 2, et à une interdistance fixe et précise pouvant être égale à 250 µm.

Un plan de sortie de sciage ou de polissage des extrémités des guides 222, 224, 226 et 230, adjacentes aux composants 300 ou 400, non perpendiculaire à l'axe des guides, peut être réalisé pour limiter les problèmes de réflexion.

Le composant 300 peut comprendre par exemple une barette de composants optoélectroniques composée d'émetteurs 1,5 µm, de photodiodes 1,5 µm, d'émetteurs 1,3 µm et de photodiodes 1,3 µm à des pas de positionnement précis, 250 µm par exemple, correspondant au pas des exirémités des guides 222, 224, 226 et 230, au niveau du bord transversal des plans de gravure 120 et 130. Une telle barette 300 peut être associée à un module électronique 310 comprenant par exemple des moyens assurant les fonctions de driver, de préamplification, et de traitement.

Le composant 400 comprend quant à lui une barette munie sur sa surface supérieure des rainures en Vé au pas identique à celui des 8 extrémités des guides 222, 224, 226 et 230 au niveau du bord transversal précité, pour recevoir des fibres optiques monocoeurs et leur revêtement époxy.

Les techniques d'alignement de ces fibres monocoeurs sur les guides 222, 224, 226 et 230 peuvent être de type dynamique collectif ou statique. De telles techniques d'alignement classiques en elles-mêmes ne seront pas décrites par la suite.

Comme indiqué précédemment dans le cadre de la présente invention, deux substrats 100, de préférence identiques sont superposés en vis à vis, de sorte que les rainures 110 alignées servent à l'autocentrage de précision de la fibre multicoeur 10 ou d'une pige de précision équivalente.

Après mise en place de la fibre multicoeur 10, les deux substrats 100 sont fixés par collage ou par soudage.

Le positionnement de la fibre multicoeur 10 peut être fait soit directement à l'assemblage par collage de celle-ci dans les deux rainures 110 en U alignées, soit par l'intermédiaire d'un embout de connectique où la fibre multicoeurs 10 est libre en extrémité sur quelques millimètres, clivée avec une bonne précision de positionnement par rapport à une référence qui prend appui sur le champ des deux substrats 100. Dans ce cas il est préférable de prévoir lors de l'attaque des rainures centrales 110, des angles de dépouille pour faciliter l'introduction de la fibre multicoeurs dans le composant, sans préguidage trop précis.

Bien entendu la présente invention n'est pas limitée aux modes de réalisation particuliers qui viennent d'être décrits, mais s'étend à toute variante conforme à son esprit.

La présente invention permet de bénéficier du faible coût des fibres multicoeurs. On a démontré en effet que le coût du coeur optique d'une fibre multicoeurs est environ deux fois plus faible que celui d'une fibre classique.

Elle permet par exemple de proposer un composant optoélectronique intégré permettant de transmettre 8 trains STM1 (155 Mbits normalisés) bidirectionnels, séparés optiquement, sur une même fibre de 4 coeurs, composant à faible encombrement et faible coût.

## Revendications

1. Dispositif de connexion pour fibre multicoeur (10) caractérisé par le fait qu'il comprend deux substrats (100) adaptés pour être superposés et comprenant chacun une optique planaire (200) à guides multiples (222, 224, 226, 230) de sorte que les guides des deux substrats (100) soient disposés dans des plans parallèles qui coïncident avec les coeurs (11, 12, 13, 14) de la fibre (10).

2. Dispositif selon la revendication 1, caractérisé par le fait que les substrats (100) sont réalisés en silicium.

3. Dispositif selon l'une des revendications 1 ou 2, caractérisé par le fait que la fibre (10) possède 4 coeurs.

4. Dispositif selon l'une des revendications 1 à 3, caractérisé par le fait que chaque substrat (100) possède une rainure (110) de section droite rectangulaire constante encadrée de deux murets rectilignes (111, 112), dont la largeur est complémentaire de la dimension médiane de la fibre (10) à connecter et la profondeur est complémentaire de la moitié de cette dimension médiane.

5. Dispositif selon l'une des revendications 1 à 4, caractérisé par le fait que l'optique planaire (200) est réalisé en silice.

6. Dispositif selon l'une des revendications 1 à 5, caractérisé par le fait que l'optique planaire (200) est composée d'une couche de silice primaire (210), d'un réseau de guides (220) formés de silice dopée déposés sur la silice primaire (210), et d'une couche de silice de recouvrement (240).

7. Dispositif selon l'une des revendications 1 à 6, caractérisé par le fait que chaque substrat (100) possède au delà de l'optique planaire (200) au moins un plan de gravure (140, 150) plus profond que le plan de gravure (120) recevant l'optique planaire (200).

8. Dispositif selon l'une des revendications 1 à 7, caractérisé par le fait que chaque substrat (100) possède sur ses bords longitudinaux, des épaulements longitudinaux (160, 165) dont les sommets coplanaires coïncident avec les sommets de murets (111, 112) définissant une rainure (110) de réception de la fibre (10).

9. Dispositif selon l'une des revendications 1 à 8, caractérisé par le fait que l'optique planaire (200) comporte un réseau de guides (220) qui comprend deux guides principaux (222, 224) et deux guides auxiliaires (226, 230) de plus faible longueur, qui possèdent chacun une portion incurvée (227, 231) proche respectivement des guides principaux (222, 224) pour permettre un couplage avec ceux-ci d'onde évanescente sélectif en longueur d'onde.

10. Dispositif selon l'une des revendications 1 à 9, caractérisé par le fait que
chaque guide (222, 224, 226, 230) possède une bifurcation (223, 225, 228, 232) pour autoriser une liaison bidirectionnelle.

11. Dispositif selon l'une des revendications 1 à 10, caractérisé par le fait que les autres extrémités des guides auxiliaires (226, 230) sont traitées mécaniquement pour éviter de trop grandes réflexions à ce niveau.

12. Dispositif selon l'une des revendications 1 à 11, caractérisé par le fait que les guides de l'optique planaire (200) sont munis d'un filtre de coupure.

13. Dispositif selon l'une des revendications 1 à 12, caractérisé par le fait que chaque substrat (200) supporte un composant électronique de traitement (300).

14. Dispositif selon l'une des revendications 1 à 12, caractérisé par le fait que chaque substrat (200) supporte une barette (400) munie sur sa surface supérieure de rainures en Vé au pas identique à celui des extrémités des guides (222, 224, 226 et 230) de l'optique planaire (200).
